# EUROPÄISCHE PATENTSCHRIFT

(11) **EP 3 377 820 B1**
(45) Veröffentlichungstag und Bekanntmachung des Hinweises auf die Patenterteilung: **11.12.2019**
(21) Anmeldenummer: 16788817.1
(22) Anmeldetag: 26.10.2016
(51) Int. Cl.: F24C 3/12

(54) **GASKOCHSTELLE UND KOCHFELDANORDNUNG**
GAS COOKER AND COOKING HOB ARRANGEMENT
POINT DE CUISSON À GAZ ET SYSTÈME DE PLAQUE DE CUISSON

(30) Priorität: 17.11.2015 ES 201531664
(43) Veröffentlichungstag der Anmeldung: 26.09.2018
(73) Patentinhaber: BSH Hausgeräte GmbH, 81739 München (DE)
(72) Erfinder: CORRAL RICALDE, Javier, 39600 Muriedas (ES); LLORENTE GIL, Sergio, 50009 Zaragoza (ES); OCHOA TORRES, Jose Salvador, 39611 El Astillero (Santander) (ES); RIVERA PEMAN, Julio, 50410 Cuarte de Huerva (Zaragoza) (ES); RUEDA SANUDO, Cristina, 39609 Escobedo de Camargo (ES)
(86) Internationale Anmeldenummer: PCT/IB2016/056430
(87) Internationale Veröffentlichungsnummer: WO 2017/085580

(56) Entgegenhaltungen:
- WO-A1-2015/049600
- DE-A1- 19 949 601
- JP-A- 2006 207 962
- JP-A- 2008 249 176
- JP-A- 2011 163 759
- US-A- 5 549 382

## Beschreibung

Die vorliegende Erfindung betrifft eine Gaskochstelle und eine Kochfeldanordnung. Moderne Haushaltsgeräte unterliegen strengen Sicherheitsvorschriften. Insbesondere sind effektive Maßnahmen zur Brandschutzverhütung in Bezug auf Kochstellen, vor allem Gaskochstellen, gefordert. Ein Gaskochstellenbrand kann unter anderem verhindert werden, indem die Temperatur eines der Gaskochstelle zugeordneten Gargutbehälters bzw. Topfs stets unterhalb eines Schwellenwerts von 250 °C gehalten wird. Dies erfordert die permanente Überwachung der Temperatur des Gargutbehälters. Die DE 199 49 601 A1 und die DE 10 2007 058 945 A1 beschreiben zum Beispiel jeweils eine Gaskochstelle mit einem Infrarotsensor, der seitlich außerhalb des Gasbrenners vorgesehen ist und Wärmestrahlung erfasst, welche von einer Mantelfläche eines Gargutbehälters abgestrahlt wird.

Weiterer relevanter Stand der Technik ist im Dokument WO 2015/049600 A1 zu finden.

Vor diesem Hintergrund besteht eine Aufgabe der vorliegenden Erfindung darin, eine verbesserte Gaskochstelle sowie eine verbesserte Kochfeldanordnung bereitzustellen. Demgemäß wird eine Gaskochstelle vorgeschlagen. Die Gaskochstelle umfasst einen Gasbrenner und eine Infrarotsensoreinrichtung. Der Gasbrenner weist eine Brennerbasis, einen Brennerdeckel und mehrere Gasausströmöffnungen auf. Die Infrarotsensoreinrichtung ist eingerichtet, eine Temperatur eines der Gaskochstelle zugeordneten Gargutbehälters zu ermitteln. Die Gasausströmöffnungen sind auf einer geschlossenen Kurve angeordnet. Die Infrarotsensoreinrichtung ist bezüglich der geschlossenen Kurve radial nach außen versetzt angeordnet. Die Infrarotsensoreinrichtung durchstößt zumindest teilweise die Brennerbasis und den Brennerdeckel.

Insbesondere durchstößt die Infrarotsensoreinrichtung die Brennerbasis und den Brennerdeckel zumindest teilweise. Die Infrarotsensoreinrichtung kann die Brennerbasis durchstoßen, indem eine Öffnung durch die Brennerbasis gebildet ist, wobei die Öffnung die Infrarotsensoreinrichtung aufnimmt. Die Infrarotsensoreinrichtung kann zudem den Brennerdeckel durchstoßen, indem eine entsprechende Öffnung durch den Brennerdeckel gebildet ist, welche die Infrarotsensoreinrichtung aufnimmt. Eine Öffnung ist insbesondere durch ein Abtragen des Materials des Brennerdeckels und/oder der Brennerbasis, z.B. mithilfe eines Durchbohrens, Fräsens, etc., gebildet.

Insbesondere kann die Infrarotsensoreinrichtung die Brennerbasis und/oder den Brennerdeckel derart durchstoßen, dass zumindest eine infrarotdurchlässige Strecke zwischen dem Gargutbehälter und der Infrarotsensoreinrichtung ausgebildet ist. Dabei kann die Brennerbasis und/oder der Brennerdeckel durchbohrt sein. Ferner kann eine Öffnung, die sich entlang einer Verbindungslinie zwischen der Infrarotsensoreinrichtung und einer Unterseite des Gargutbehälters erstreckt, durch die Brennerbasis und/oder den Brennerdeckel gebildet sein.

Insbesondere kann die Sensoreinrichtung in Richtung eines Bodens des Gargutbehälters ausgerichtet sein. Zum Beispiel kann die Sensoreinrichtung von unten nach oben zu dem Gargutbehälter gerichtet sein. Dabei kann eine Blickrichtung der Sensoreinrichtung zu einer Flächennormale einer Oberseite des Brennerdeckels einen Winkel von 0° bis 60° bilden. Mit der Blickrichtung wird eine Richtung bezeichnet, in welcher das Sensorelement und/oder der Lichtleiter eine elektromagnetische Strahlung erfassen kann.

Die Infrarotsensoreinrichtung ist insbesondere eingerichtet, elektromagnetische Strahlung in einem Wellenlängenbereich zu erfassen, der einer thermischen Schwingung eines Festkörpers entsprechen kann. Eine solche elektromagnetische Strahlung kann als Wärmestrahlung und/oder thermische Strahlung betrachtet werden.

Die Infrarotsensoreinrichtung kann insbesondere ein Sensorelement umfassen, das das einfallende Lichtspektrum im infraroten Wellenlängenbereich auswertet. Zusätzlich dazu kann die Infrarotsensoreinrichtung einen Lichtleiter umfassen, der eingerichtet ist, elektromagnetische Strahlung von dem oder an das Sensorelement zu übermitteln. Das Sensorelement und der Lichtleiter, der an dem Sensorelement angekoppelt ist, können die Infrarotsensoreinrichtung bilden. Es ist in Ausführungsformen möglich, dass ausschließlich der dem Sensorelement zugeordneten Lichtleiter die Brennerbasis und/oder den Brennerdeckel durchstößt. Das Sensorelement ist dann insbesondere an einer hitzegeschützten Stelle in oder an der Gaskochstelle angebracht. Das Sensorelement kann an einer zentralen Steuereinrichtung für die Bedienung und/oder den Betrieb der Gaskochstelle oder einer mehrere Gaskochstellen umfassenden Kochfeldanordnung positioniert sein.

Die getrennte Anordnung von Sensorelement und Lichtleiter hat den Vorteil, dass das eher hitzeempfindliche Sensorelement an einer geschützten Stelle angebracht werden kann, die der direkten Wärmestrahlung der Flammen nicht ausgesetzt ist.

Das Sensorelement und/oder der Lichtleiter kann dabei die Brennerbasis und/oder den Brennerdeckel zumindest teilweise durchstoßen. Das Sensorelement und der Lichtleiter können die Brennerbasis und/oder den Brennerdeckel gemeinsam durchstoßen, d.h. in einer gemeinsamen Öffnung, die durch die Brennerbasis und/oder den Brennerdeckel gebildet ist, angeordnet sein. Zum Beispiel kann die Brennerbasis von dem Sensorelement durchstoßen sein, wobei der Brennerdeckel von dem Lichtleiter durchstoßen ist, der von dem Gargutbehälter abgestrahlte Wärmestrahlung erfasst und an das Sensorelement weiterleitet. Ferner kann die Infrarotsensoreinrichtung so ausgebildet sein, dass der Lichtleiter den Brennerdeckel und/oder die Brennerbasis durchstößt, und das Sensorelement außerhalb des Gasbrenners angeordnet ist.

Insbesondere kann der Lichtleiter in dem Gasbrenner oberhalb des Sensorelements angeordnet sein und eingerichtet sein, Wärmestrahlung von dem Gargutbehälter zu erfassen und an das Sensorelement weiterzuleiten. Des Weiteren kann das Sensorelement im Gasbrenner angeordnet und eingerichtet sein, Wärmestrahlung von dem Gargutbehälter zu erfassen und Sensorsignale an weitere Elemente weiterzuleiten. Hierbei kann der Lichtleiter von unten an dem Sensorelement angeschlossen sein. Insbesondere sind das Sensorelement und/oder der Lichtleiter in Richtung des Gargutbehälters ausgerichtet. Wenn sich der Gargutbehälter, dessen Temperatur zu bestimmen ist, oberhalb des Gasbrenners angeordnet, kann das Sensorelement und/oder der Lichtleiter nach oben gerichtet sein. Beispielsweise kann eine Blickrichtung des Sensorelements und/oder des Lichtleiters mit einer Flächennormale der Oberseite des Brennerdeckels einen Winkel von 0° - 60° bilden.

Vorzugsweise ist das Sensorelement oder der Lichtleiter derart angeordnet, dass die Blickrichtung ausschließlich so ausgerichtet ist, dass sie einer Unterseite eines Gargutbehälters zugewandt ist und nicht die möglichen Flammen erfasst.

Der Gargutbehälter kann ein Emissionsspektrum aufweisen, das abhängig von der Temperatur ist. Insbesondere kann das Emissionsspektrum des Gargutbehälters in dem infraroten Wellenlängenbereich als eine Funktion von Temperatur des Gargutbehälters variieren. Beispielsweise kann auf der Basis einer Schwarzkörper-Strahlung und/oder des Planckschen Strahlungsgesetzes aus dem Emissionsspektrum die Temperatur des Gargutbehälters ermittelt werden.

Durch den Einsatz einer Infrarotsensoreinrichtung kann die Temperatur des Gargutbehälters ermittelt werden, ohne dabei ein elektrischer und/oder physikalischer Kontakt zwischen dem Gargutbehälter und einem die Temperatur bestimmenden Element erforderlich ist. Um Störungen des erfassten Spektrums und/oder eine Beschädigung der Infrarotsensoreinrichtung durch Flammen des Gasbrenners zu vermeiden, wird die Infrarotsensoreinrichtung in und/oder unter der Brennerbasis und dem Brennerdeckel angeordnet. Dadurch kann die Infrarotsensoreinrichtung ferner vor einer mechanischen und/oder chemischen Beschädigung, z.B. Abnutzung, Verfärbung, Verschmutzung, usw., geschützt sein. Zudem ist die Infrarotsensoreinrichtung dadurch leichter zu reinigen.

Gasausströmöffnungen können insbesondere als Öffnungen in oder an dem Brennerdeckel und/oder der Brennerbasis ausgebildet sein. Insbesondere kann der Gasbrenner einen Hohlraum aufweisen, der von dem Brennerdeckel und/oder der Brennerbasis umschlossen ist und zum Erzeugen eines entflammbaren Gasgemisches geeignet ist. Die Gasausströmöffnungen können geeignet sein, ein Ausströmen des entflammbaren Gasgemisches von innerhalb des Gasbrenners nach außerhalb desselben zu ermöglichen.

Die Gasausströmöffnungen können auf einer geschlossenen Kurve in oder an dem Gasbrenner angeordnet sein. Zum Beispiel kann die geschlossene Kurve als eine umlaufende Kurve entlang eines Umfangs oder parallel zu einem Umfang der Brennerbasis und/oder des Brennerdeckels ausgebildet sein. Die Infrarotsensoreinrichtung kann dann bezüglich der geschlossenen Kurve nach außen versetzt angeordnet sein, um beispielsweise eine Störung der Infrarotsensoreinrichtung durch das ausströmende Gas zu vermeiden.

Gemäß einer Ausführungsform ist die Infrarotsensoreinrichtung dazu eingerichtet, von einer Unterseite des Gargutbehälters abgestrahlte Wärmestrahlung zu erfassen.

Die Infrarotsensoreinrichtung kann insbesondere einen Erfassungsbereich aufweisen, der einem Volumen, insbesondere eines Kegels, entspricht, in dem Wärmestrahlung von der Infrarotsensoreinrichtung erfasst werden kann. Die Infrarotsensoreinrichtung ist vorzugsweise derart ausgerichtet, dass der Erfassungsbereich zumindest einen Teil der Unterseite des Gargutbehälters abdeckt.

Insbesondere kann die Wärmestrahlung eine Wellenlänge von 750 nm bis 1000 nm aufweisen. Insbesondere kann die Wärmestrahlung zumindest teilweise im infraroten Wellenlängenbereich liegen. Die Infrarotsensoreinrichtung kann ferner ausgestaltet sein, elektromagnetische Wellen außerhalb des infraroten Wellenlängenbereichs zu erfassen.

Insbesondere befindet sich der Gargutbehälter oberhalb des Gasbrenners, in oder unter dem die Sensoreinrichtung angeordnet ist, und die Sensoreinrichtung ist von unten auf den Gargutbehälter gerichtet. Dementsprechend wird die Temperatur an der Unterseite des Gargutbehälters erfasst.

Gemäß einer weiteren Ausführungsform ist ein Schlitz in der Brennerbasis und/oder dem Brennerdeckel zur Aufnahme der Infrarotsensoreinrichtung ausgebildet. Dabei kann die Brennerbasis und/oder der Brennerdeckel einen Schlitz zur Aufnahme der Infrarotsensoreinrichtung aufweisen.

Insbesondere kann der Schlitz in einer Draufsicht von oben sich von einem Rand der Brennerbasis und des Brennerdeckels geradlinig nach innen erstrecken. Dabei kann der Schlitz insbesondere vom Rand eines Brennerdeckels und/oder einer Brennerbasis aus nach innen eingefräst, eingeschlitzt, eingeschnitten, eingerissen und/oder auf eine andere Weise ausgebildet sein.

Der Schlitz kann sich auf einen Spalt, Einschnitt, eine Nut, Rille, Kerbe, Ausnehmung, Auskehlung, Aushöhlung und/oder ein teilweise geschlossenes Volumen beziehen. Der Schlitz kann insbesondere die Infrarotsensoreinrichtung derart aufnehmen, dass die Infrarotsensoreinrichtung in oder unter dem Schlitz angeordnet ist.

Gemäß einer weiteren Ausführungsform weist die Brennerbasis und/oder der Brennerdeckel eine Durchführung zur Aufnahme der Infrarotsensoreinrichtung auf.

Insbesondere kann die Durchführung linear entlang einer Achse ausgebildet sein, die senkrecht zu einer Deckplatte ist, auf welcher die Gaskochstelle angeordnet ist. Die Durchführung in dem Brennerdeckel und die Durchführung in der Brennerbasis können einen kreisförmigen Querschnitt aufweisen und koaxial angeordnet sein, d.h. die Durchführungen können kommunikativ miteinander verbunden sein.

Alternativ oder zusätzlich können die Durchführungen einen kreisförmigen Querschnitt und unterschiedliche Durchmesser aufweisen. Beispielsweise kann die Durchführung in der Brennerbasis mit einem kleineren Durchschnitt als die Durchführung in dem Brennerdeckel ausgebildet sein. Die Durchführung in der Brennerbasis kann eingerichtet sein, einen Lichtleiter aufzunehmen, während die Durchführung in dem Brennerdeckel zum Aufnehmen eines Sensorelements eingerichtet ist. Dabei können der Lichtleiter und das Sensorelement jeweils in einer zylindrischen Form ausgestaltet sein und der Lichtleiter einen kleineren Durchmesser aufweisen als das Sensorelement.

Ferner ist denkbar, dass die Durchführung in der Brennerbasis einen größeren Durchmesser als die Durchführung in dem Brennerdeckel aufweist. Dementsprechend können die Durchführung in dem Brennerdeckel zum Aufnehmen des Lichtleiters, und die Durchführung in der Brennerbasis zum Aufnehmen des Sensorelements eingerichtet sein.

Zusätzlich oder alternativ kann in der Durchführung in dem Brennerdeckel ein Kollimator, ein Sensorkopf oder dergleichen angeordnet und mit dem Lichtleiter verbunden sein.

Gemäß einer weiteren Ausführungsform weist die Infrarotsensoreinrichtung eine Oberseite auf und ist derart angeordnet, dass die Oberseite dem Gargutbehälter zugewandt ist und mit einer Brennerdeckeloberseite bündig abschließt. Dabei kann die Infrarotsensoreinrichtung eine dem Gargutbehälter zugewandte Oberseite aufweisen, wobei die Oberseite mit einer Brennerdeckeloberseite bündig abschließt.

Die Oberseite der Infrarotsensoreinrichtung kann insbesondere geeignet sein, einfallende Wärmestrahlung an ein Sensorelement und/oder einen Lichtleiter zu übermitteln und/oder weiterzuleiten. Die Oberseite ist insbesondere infrarotdurchlässig ausgestaltet. Die Oberseite kann ein bruch- und kratzfestes Material umfassen, um die Infrarotsensoreinrichtung vor einer Beschädigung durch einen mechanischen, chemischen und/oder elektrischen Einfluss zu schützen.

Aufgrund des bündigen Abschlusses der Oberseite mit der Brennerdeckeloberseite, die insbesondere dem Gargutbehälter zugewandt ist, kann die Oberseite der Infrarotsensoreinrichtung zudem leichter gereinigt werden.

Gemäß einer weiteren Ausführungsform weist die Infrarotsensoreinrichtung eine Oberseite auf und ist derart angeordnet, dass sich die Oberseite unterhalb einer Brennerdeckeloberseite befindet. Dabei kann die Infrarotsensoreinrichtung eine Oberseite aufweisen, wobei die Oberseite innerhalb des Brennerdeckels angeordnet ist.

Gemäß einer weiteren Ausführungsform ist ein infrarotdurchlässiges Material oberhalb einer Oberseite der Infrarotsensoreinrichtung angebracht.

Insbesondere kann die Oberseite eine obere Seite eines Sensorelementes der Infrarotsensoreinrichtung darstellen. Das Sensorelement kann in den oben genannten Schlitz und/oder in die oben genannte Durchführung versenkt, eingesetzt oder auf eine andere Weise eingefügt sein. Es ist denkbar, dass sich ein Lichtleiter von der oberen Seite des Sensorelements aus hin zu der Brennerdeckeloberfläche erstreckt. Dabei könnte ein infrarotdurchlässiges Material den Schlitz und/oder die Durchführung bündig abschließen.

Zusätzlich oder alternativ kann der Schlitz und/oder die Durchführung oberhalb der Oberseite der Infrarotsensoreinrichtung mit einem infrarotdurchlässigen Material gefüllt sein. Dadurch kann die Infrarotsensoreinrichtung vor einer mechanischen, chemischen und/oder elektrischen Beschädigung geschützt sein.

Das Infrarotdurchlässige Material weist insbesondere einen Transmissionsgrad für elektromagnetische Wellen im infraroten Wellenlängenbereich von über 0,5, vorzugsweise über 0,7 und noch bevorzugter über 0,85 auf. Das infrarotdurchlässige Material kann beispielsweise ionische Einkristalle (z.B. Natriumchlorid), Halbleiter in einkristalliner oder polykristalliner Form (z.B. Germanium oder Silizium), polykristalline II-VI-Verbindungen (z.B. Zinksulfide oder Zinkselenide), Chalkogenidgläser und/oder Kunststoffe auf Basis von Polymethylmethacrylat umfassen.

Gemäß einer weiteren Ausführungsform weist der Gasbrenner mehrere Gasausströmöffnungen zum Erzeugen von Flammen auf. Die Flammen bilden bei einem bestimmungsgemäßen Betrieb des Gasbrenners einen Flammenbereich, und die Gasausströmöffnungen sind derart angeordnet, dass ein von der Infrarotsensoreinrichtung erfasster Bereich außerhalb des Flammenbereichs liegt. Vorzugsweise sind die Gasausströmöffnungen und die Infrarotsensoreinrichtung so angeordnet, dass bei einer maximalen Heizleistungsstufe des Gasbrenners der erfasst Bereich außerhalb des Flammenbereichs liegt.

Gemäß einer weiteren Ausführungsform ist die Infrarotsensoreinrichtung innerhalb einer Auflagefläche des Brennerdeckels auf der Brennerbasis angeordnet.

Eine Gaskochstelle mit dem Gasbrenner kann eine Deckplatte aufweisen, auf oder an welcher der Gasbrenner positioniert ist. Die Deckplatte kann an der Position des Gasbrenners eine Öffnung aufweisen, durch die ein entflammbares Gas dem Gasbrenner zugeführt werden kann.

Die Brennerbasis kann eine zylindrische Form mit einer ringförmigen Mantelfläche aufweisen und beispielsweise als ein Hohlzylinder, ein Ring und/oder ein Kranz ausgebildet sein. Der Hohlraum in dem mittleren Bereich der Brennerbasis, der von der Mantelfläche umgeben ist, kann als eine Mischkammer zum Vermischen von Gas mit der Luft eingerichtet sein. Eine Stirnseite der ringförmigen Mantelfläche der Brennerbasis kann als die Auflagefläche benutzt werden, auf der der Brennerdeckel auf der Brennerbasis aufliegt. Entlang eines Umlaufs der Mantelfläche der Brennerbasis ist eine Mehrzahl von Durchführungen, die durch die Mantelfläche durchstoßen, als Gasausströmöffnungen ausgebildet.

Zwischen einer Unterseite des Brennerdeckels, die insbesondere konkav gewölbt sein kann, und der Brennerbasis kann ein Gas-Luft-Gemisch aus der Mischkammer nach außen hin zu den Gasausströmöffnungen fließen. Außerhalb der Brennerbasis und des Brennerdeckels kann ein Zündelement vorgesehen sein, das z.B. mithilfe einer Funkenentladung das entflammbare Gas-Luft-Gemisch entzündet. Daraufhin setzt das Gas-Luft-Gemisch, infolge von exothermen chemischen Reaktionen, Energie in Form von Licht und Wärme frei. Der Bereich, in dem die exothermen chemischen Reaktionen stattfinden und Licht und Wärme erzeugen, kann als Flamme bezeichnet werden. Dabei kann jede einzelne Gasausströmöffnung eine Flamme erzeugen, und die Flammen aus den Gasausströmöffnungen können sich, aufgrund des Auftriebs von erwärmten Gasen, oberhalb des Brennerdeckels vermengen. Ein Flammenbereich kann sich auf einen Bereich beziehen, in dem die Flammen in genannter Weise sich vermengen.

Insbesondere können die Gasausströmöffnungen in einer Umgebung des Schlitzes und/oder der Durchführung ausgespart sein, so dass der Erfassungsbereich der Infrarotsensoreinrichtung außerhalb des Flammenbereichs liegt.

Eine Überlappung des Erfassungsbereichs mit dem Flammenbereich könnte zu einer Störung bei der Erfassung von Wärmestrahlung durch die Infrarotsensoreinrichtung führen, da die Flammen ebenso Wärmestrahlung ausstrahlen können. Durch die Positionierung der Infrarotsensoreinrichtung innerhalb der Auflagefläche des Brennerdeckels auf der Brennerbasis, insbesondere innerhalb eines Rings, der die Mantelfläche der Brennerbasis formt, kann der Erfassungsbereich der Infrarotsensoreinrichtung außerhalb des Flammenbereichs angeordnet sein und die oben genannte Störung verhindert werden.

Gemäß einer weiteren Ausführungsform umfasst die Infrarotsensoreinrichtung einen Lichtleiter und ein Sensorelement. Der Lichtleiter ist zum Übertragen von Wärmestrahlung, die von dem Gargutbehälter abgestrahlt wird, an das Sensorelement eingerichtet. Das Sensorelement ist zum Erzeugen von Sensorsignalen in Abhängigkeit von der erfassten Wärmestrahlung eingerichtet.

Das Sensorelement kann insbesondere ein Detektor, Spektrometer und/oder ein Spektroskop sein, die zum Erfassen und/oder zum Messen einer Strahlungsintensität im infraroten Bereich geeignet sind.

Gemäß einer weiteren Ausführungsform durchstößt der Lichtleiter die Brennerbasis zumindest teilweise. Dabei ist das Sensorelement außerhalb des Gasbrenners angeordnet.

Das Sensorelement kann insbesondere unterhalb einer Kochfeldplatte, auf der die Gaskochstelle angeordnet ist, positioniert sein.

Gemäß einer weiteren Ausführungsform ist die Gaskochstelle mit einer Steuereinheit zum Ansteuern der Gaskochstelle gekoppelt. Mit Hilfe der Steuereinheit kann insbesondere eine Heizleistung der Gaskochstelle einstellbar und/oder veränderbar sein. Ferner könnte das Sensorelement mit der Steuereinheit gekoppelt und/oder in die Steuereinheit integriert sein.

Gemäß einer weiteren Ausführungsform umfasst der Lichtleiter polymere optische Fasern und/oder Glasfasern.

Polymere optische Fasern und Glasfasern können geeignet sein, Licht im infraroten Wellenlängenbereich zu transportieren. Diese Fasern können insbesondere den Herstellungsaufwand und/oder Herstellungskosten für den Lichtleiter verringern.

Gemäß einer weiteren Ausführungsform umfasst die Gaskochstelle ferner einen Topfträger, der einen Rahmen und mehrere Finger umfasst, die von dem Rahmen aus nach innen gerichtet sind. Die Sensoreinrichtung ist unterhalb eines der mehreren Finger ausgebildet. Insbesondere kann eine Oberseite der mehreren Finger als Auflageabschnitte für den Gargutbehälter benutzt werden und den Gargutbehälter von dem Gasbrenner beabstanden. Ein Finger, der sich zwischen einer Gasausströmöffnung und dem Gargutbehälter befindet, kann durch die Flamme erwärmt werden und die Wärme an die Umgebung, insbesondere an den Rahmen, abführen, was zu einem Verlust der Energie führen würde. Daher kann es energetisch günstig sein, dass unterhalb der mehreren Finger keine Gasausströmöffnungen angeordnet sind. Die Sensoreinrichtung könnte hierbei unterhalb eines der Finger angeordnet sein, so dass der Erfassungsbereich außerhalb des Flammenbereichs liegt. Dadurch kann eine Störung bei der Erfassung der Wärmestrahlung durch die Infrarotsensoreinrichtung verhindert werden.

Ferner wird eine Kochfeldanordnung vorgeschlagen, die eine oder mehrere oben oder im Folgenden erwähnte Gaskochstellen umfasst.

Eine solche Kochfeldanordnung ist imstande, eine Heizleistung an der Gaskochstelle in Abhängigkeit von erfasster Wärmestrahlung anzupassen, die insbesondere in eine Temperatur des Gargutbehälters umgerechnet werden kann. Dadurch kann insbesondere sichergestellt werden, dass der Gargutbehälter nicht übermäßig erhitzt wird, d.h. dass der Gargutbehälter nicht auf eine Temperatur oberhalb eines vorbestimmbaren Grenzwertes erwärmt wird.

Gemäß einer weiteren Ausführungsform umfasst die Kochfeldanordnung ferner eine Steuereinheit. Die Infrarotsensoreinrichtung der mindestens einen Gaskochstelle ist eingerichtet, Sensorsignale in Abhängigkeit von einer erfassten Wärmestrahlung zu erzeugen und an die Steuereinheit zu übermitteln.

Gemäß einer weiteren Ausführungsform steuert die Steuereinheit eine Heizleistung der Gaskochstelle in Abhängigkeit von den Sensorsignalen.

Die Steuereinheit kann eingerichtet sein, eine Heizleistung jeder der mindestens einen Gaskochstelle in Abhängigkeit der erfassten Wärmestrahlung zu steuern. Insbesondere kann dabei eine Flussrate des entflammbaren Gas-Luft-Gemisches zu den jeweiligen Gasbrennern gesteuert werden. Die Sensorsignale der Infrarotsensoreinrichtung können beispielsweise elektrisch, magnetisch, mechanisch, akustisch und/oder optisch übertragen werden.

Ferner kann die Steuereinheit mit dem Sensorelement der Infrarotsensoreinrichtung gekoppelt sein, es aufnehmen und/oder es umfassen. Demnach kann der Lichtleiter der Infrarotsensoreinrichtung die erfasste Wärmestrahlung der Steuereinheit zuführen, und die Steuereinheit kann entsprechende Sensorsignale erzeugen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt eine schematische Querschnittsansicht einer Ausführungsform einer Kochfeldanordnung;
- Fig. 2: zeigt eine Teilansicht II aus Fig. 1;
- Fig. 3A: bis Fig. 3E zeigen Ausführungsformen einer Durchführung in einer Teilansicht III aus Fig. 2;
- Fig. 4A: und Fig. 4B zeigen eine perspektivische Ansicht und eine Draufsicht einer ersten Ausführungsform eines Gasbrenners;
- Fig. 5: zeigt eine Vorderansicht des Gasbrenners aus Fig. 4A und Fig. 4B in teilweiser Querschnittsansicht;
- Fig. 6A: und Fig. 6B zeigen eine perspektivische Ansicht und eine Draufsicht einer zweiten Ausführungsform eines Gasbrenners;
- Fig. 7: zeigt eine Vorderansicht des Gasbrenners aus Fig. 6A und Fig. 6B in teilweiser Querschnittsansicht; und
- Fig. 8: zeigt eine Draufsicht einer Ausführungsform einer Kochfeldanordnung.

In den Figuren sind gleiche oder funktionsgleiche Elemente mit denselben Bezugszeichen versehen worden, sofern nichts anderes angegeben ist.

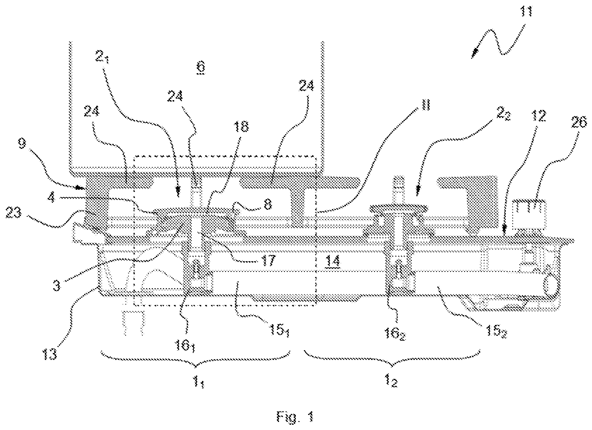

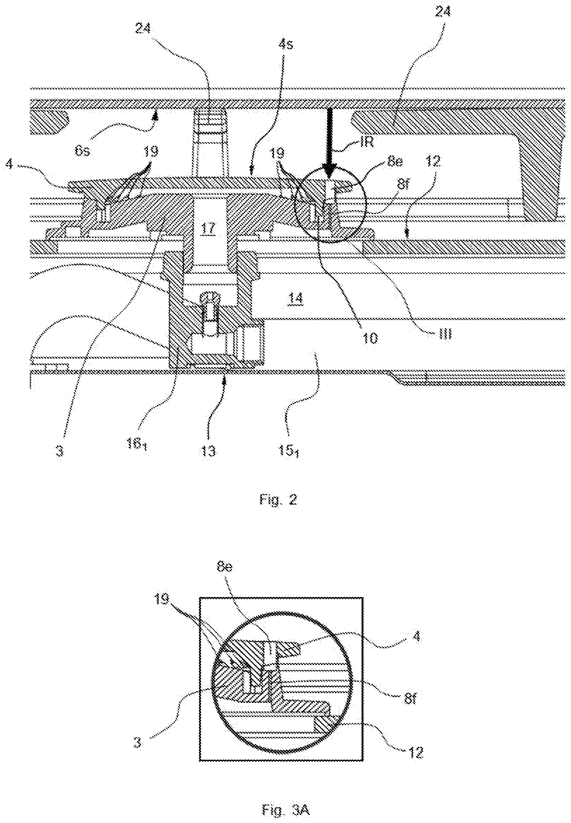

Fig. 1 zeigt eine schematische Querschnittsansicht einer ersten Ausführungsform einer Kochfeldanordnung 11. Fig. 2 zeigt eine Teilansicht II aus Fig. 1.

Die Kochfeldanordnung 11 weist mindestens zwei Kochstellen 1₁, 1₂ auf, die jeweils einen Gasbrenner 2₁, 2₂ umfassen. Die Kochfeldanordnung 11 umfasst ferner eine Deckplatte 12, auf der die Gasbrenner 2₁, 2₂ angeordnet sind. Unterhalb der Deckplatte 12 ist eine Kochmuldenwanne 13 angeordnet, die einen Raum 14 unterhalb der Deckplatte 12 abschließt. In dem Unterraum 14 sind Gaszuleitungen 15₁, 15₂ angeordnet, die jeweils den Gasbrennern 2₁, 2₂ angeschlossen sind und sie mit Gas versorgen. Der Gasbrenner 2₁ umfasst einen Brennerdeckel 4, eine Brennerbasis 3 und ein Brennerunterteil 16.

Die Brennerbasis 3, die insbesondere einen kreisförmigen Querschnitt aufweisen kann, liegt auf der Deckplatte 12 auf. Die Brennerbasis 3 weist eine zylindrische Form mit einer Mantelfläche auf, die einen Hohlraum umschließt, der als Mischkammer 17 dient, in der das zugeführte Gas mit der Luft vermischt wird. Auf einer Stirnseite der Brennerbasis 3 liegt der Brennerdeckel 4 auf. Dabei sind der Brennerdeckel 4 und die Brennerbasis 3 in einem umlaufenden Bereich 10 in Oberflächenkontakt miteinander angeordnet. Beispielsweise ist eine umlaufende Auskragung an einer Unterseite des Brennerdeckels 4 und eine umlaufende Nut an der Stirnseite der Brennerbasis 3 ausgebildet, wobei die Auskragung in die Nut eingreifen kann. Der Brennerdeckel 4 ist scheibenförmig ausgebildet.

Zwischen der Unterseite des Brennerdeckels 4 und der Brennerbasis 3 ist ein Hohlraum 18 gebildet, um ein in der Mischkammer 17 erzeugtes Gas-Luft-Gemisch zu Gasausströmöffnungen 19 zu befördern. Die Gasausströmöffnungen 19 sind als Durchgangsöffnungen in der Mantelfläche der Brennerbasis 3 ausgebildet und ermöglichen ein Ausströmen des Gas-Luft-Gemisches aus dem Hohlraum 18. In Fig.1 und 2 sind die Gasausströmöffnungen 19 radial ausgebildet. Das ausströmende Gas-Luft-Gemisch fließt unterhalb einer lateralen Auskragung des Brennerdeckels 4 radial nach außen und kann entzündet werden.

Die Gaskochstelle 1₁ weist ferner einen Topfträger 9 zum Beabstanden eines der Gaskochstelle 1₁ zugeordneten Gargutbehälters 6 eingerichtet ist. Der Topfträger 9 umfasst einen Rahmen 23, der um den Gasbrenner 2₁ herum ausgebildet ist, und mehrere Finger 24, die vom Rahmen 23 aus nach innen geformt sind. Insbesondere sind die Finger 24 derart ausgestaltet und angeordnet, dass der Gargutbehälter 6 stabil auf einer Oberseite der Finger 24 anliegen kann.

In der Brennerbasis ist eine schmale Durchführung 8f ausgebildet, in der ein Lichtleiter 5f aufgenommen ist. Koaxial zu der Durchführung 8f ist eine weitere Durchführung 8e in dem Brennerdeckel 4 ausgebildet, die ein Sensorelement 5e aufnimmt. Das Sensorelement 5e bildet zusammen mit dem Lichtleiter 5f eine Infrarotsensoreinrichtung 5, die zum Erfassen von Wärmestrahlung IR geeignet ist, die von einer Unterseite 6s des Gargutbehälters 6 abgestrahlt wird. Die Infrarotsensoreinrichtung 5e, 5f durchstoßen somit die Brennerbasis 3 und den Brennerdeckel 4.

Fig. 3A bis Fig. 3E zeigen Ausführungsformen einer Durchführung 8e, 8f in einer Teilansicht III aus Fig. 2.

In Fig. 3A ist eine erste Durchführung 8e in dem Brennerdeckel 4 ausgebildet. Die erste Durchführung 8e weist einen kreisförmigen Querschnitt auf und ist eingerichtet, ein Sensorelement 5e aufzunehmen. Eine zweite Durchführung 8f, die einen kreisförmigen Querschnitt mit einem kleineren Durchmesser als die erste Durchführung 8e aufweist, ist in der Brennerbasis 3 ausgebildet und nimmt den Lichtleiter 5e auf, der an das Sensorelement 5e angeschlossen ist.

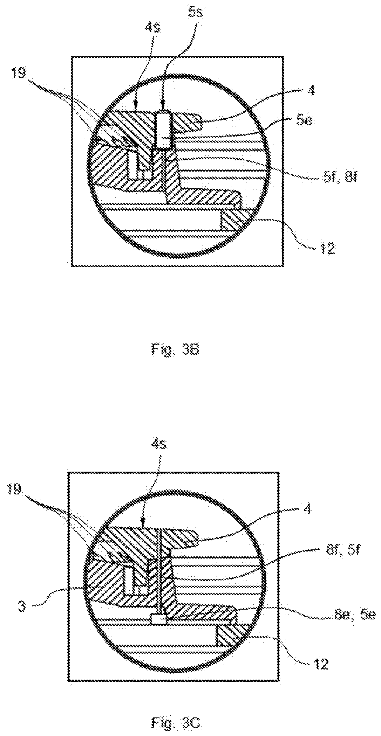

Das Sensorelement 5e kann die erste Durchführung 8e zumindest teilweise füllen. Fig. 3B zeigt ein Sensorelement 5e, das die erste Durchführung 8e in dem Brennerdeckel 4 vollständig füllt. Dabei ist eine Oberseite 5s des Sensorelements 5e bündig mit einer Brennerdeckeloberseite 4s angeordnet.

Falls das Sensorelement 5e ein geringeres Volumen aufweist als ein Fassungsvolumen der ersten Durchführung 8e, kann das restliche Volumen der ersten Durchführung mit einem infrarotdurchlässigen Material gefüllt werden. Der Lichtleiter 5f ist durch eine zweite Durchführung 8f in der Brennerbasis 3 geführt.

In Fig. 3C durchstößt eine Durchführung 8f sowohl den Brennerdeckel 4 als auch die Brennerbasis 3 und ist zum Aufnehmen eines Lichtleiters 5f eingerichtet. Unterhalb der Brennerbasis 3 kann ein Sensorelement 5e positioniert und mit dem Lichtleiter 5f verbunden werden.

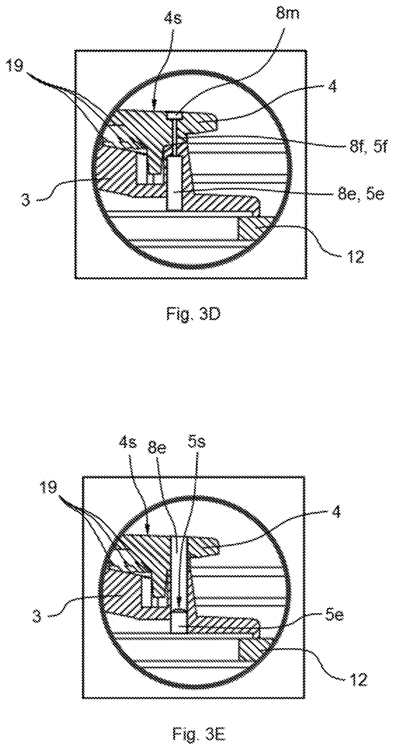

In Fig. 3D ist die Brennerbasis 3 teilweise von einer ersten Durchführung 8e und teilweise von einer zweiten Durchführung 8f durchstoßen. In dem Brennerdeckel 4 ist die zweite Durchführung 8f zum Aufnehmen eines Lichtleiters 5f ausgebildet. Eine weitere Durchführung 8m ist in Oberflächennähe der Brennerdeckeloberfläche 4s ausgebildet und ist koaxial zu der zweiten Durchführung 8f angeordnet. Die weitere Durchführung 8m ist mit einem infrarotdurchlässigen Material gefüllt. Einfallende Wärmestrahlung IR kann das infrarotdurchlässige Material passieren und zu dem Lichtleiter 5f in der zweiten Durchführung 8f gelangen, der die Wärmestrahlung IR an ein Sensorelement 5e übermittelt.

In Fig. 3E durchstößt eine erste Durchführung 8e sowohl die Brennerbasis 3 als auch den Brennerdeckel 4. Dabei weist ein Sensorelement 5e eine Oberseite 5s auf und ist derart angeordnet, dass sich die Oberseite 5s unterhalb der Brennerdeckeloberseite 4s befindet. Die erste Durchführung 8e kann oberhalb der Oberseite 5s bis zu der Brennerdeckeloberseite 4s mit einem infrarotdurchlässigen Material gefüllt sein.

Ferner ist denkbar (nicht gezeigt), dass das Sensorelement 5e außerhalb des Gasbrenners 2 oder von dem Gasbrenner 2 entfernt, z.B. unterhalb der Deckplatte 12, angeordnet ist. Demnach durchstößt der Lichtleiter 5f zumindest teilweise die Brennerbasis 3, den Brennerdeckel 4 und/oder die Deckplatte 12.

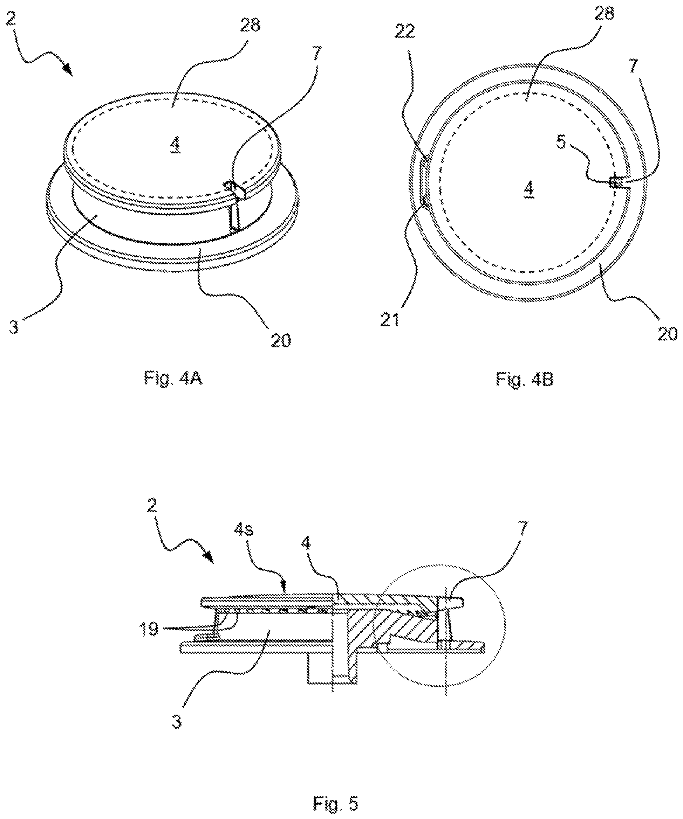

Fig. 4A und Fig. 4B zeigen eine perspektivische Ansicht und eine Draufsicht einer weiteren Ausführungsform eines Gasbrenners 2. Fig. 5 zeigt eine Vorderansicht des Gasbrenners 2 in teilweiser Querschnittsansicht.

Der Gasbrenner 2 weist ein Ringelement 20 auf, das an einer Oberseite der Deckplatte 12 aufliegt und eingerichtet ist, den Gasbrenner 2a auf der Deckplatte 12 zu fixieren. Die Brennerbasis 3 weist mehrere Gasausströmöffnungen 19 auf, die entlang oder auf einer geschlossenen Kurve 28 angeordnet sind. Die geschlossene Kurve 28 ist insbesondere kreisförmig ausgestaltet und verläuft parallel zu einem Umfang der Brennerbasis 3. Die Gasausströmöffnugnen 19 sind Durchgangsöffnungen, die ein Ausströmen eines Gases oder Gasgemisches aus einem Hohlraum ermöglicht, der von der Brennerbasis 3 und dem Brennerdeckel 4 umschlossen wird.

Der Gasbrenner 2 weist einen Schlitz 7 auf, der von einem Rand jeweils der Brennerbasis 3 und des Brennerdeckels 4 aus geradlinig nach innen ausgebildet, z.B. radial eingeschlitzt, eingeschnitten und/oder eingefräst ist. Die Infrarotsensoreinrichtung 5 ist in dem Schlitz 7 angeordnet, wobei die Oberseite 5s der Infrarotsensoreinrichtung 5 nach oben zeigt, um eine Wärmestrahlung IR, welche von einer unteren Seite des über dem Gasbrenner 2 positionierten Gargutbehälters 6 zu erfassen. Insbesondere ist der Schlitz 7 auf der geschlossenen Kurve 28 positioniert.

Der Gasbrenner 2 weist ferner ein Zündelement 21 und ein Thermoelement 22 auf. Das Zündelement 21 ist eingerichtet, das ausströmende Gas-Luft-Gemisch mithilfe einer Funkenentladung zu zünden, d.h. exotherme chemische Reaktionen zur Erzeugung von Licht und Wärme zu initiieren. Infolgedessen wird ein Flammenbereich erzeugt, der durch einen Zusammenschluss von mehreren Flammen aus den Gasausströmöffnungen 19 gebildet wird. Das Thermoelement 22 ist eingerichtet, eine Temperatur in dem Flammenbereich zu ermitteln.

Die Gasausströmöffnungen 19 sind in einer Umgebung des Schlitzes 7 ausgespart, d.h. es wird keine Flamme in unmittelbarer Nähe des Schlitzes 7 erzeugt. Folglich liegt ein Erfassungsbereich der in dem Schlitz 7 positionierten Infrarotsensoreinrichtung 5 außerhalb des Flammenbereichs. Zusätzlich kann die Infrarotsensoreinrichtung 5 radial außerhalb der geschlossenen Kurve 28 positioniert sein, um ein Überlappen des Flammenbereichs mit einem Bereich, in dem die Infrarotsensoreinrichtung 5 die Wärmestrahlung IR erfassen kann, zu verhindern.

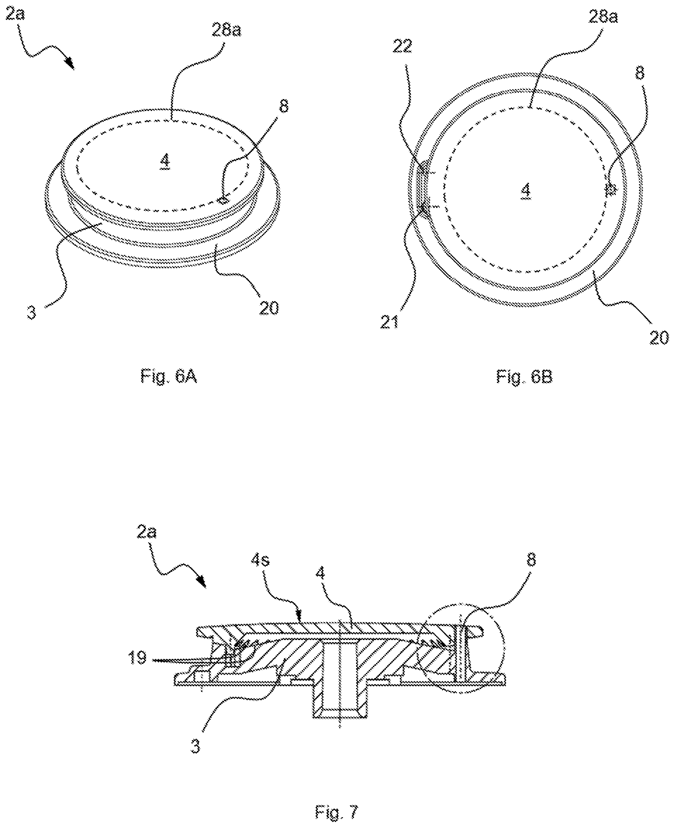

Fig. 6A und Fig. 6B zeigen eine perspektivische Ansicht und eine Draufsicht einer zweiten Ausführungsform eines Gasbrenners 2a. Fig. 7 zeigt eine Vorderansicht des Gasbrenners 2a in teilweiser Querschnittsansicht.

Der Gasbrenner 2a weist im Wesentlichen eine gleiche Struktur wie diejenige des Gasbrenners 2 auf, wobei der Schlitz 7 des Gasbrenners 2 durch eine Durchführung 8 ersetzt ist. Die Durchführung 8 ist senkrecht ausgebildet. Die Durchführung 8 durchstößt eine Brennerbasis 3 und einen Brennerdeckel 4 und ist zum Aufnehmen einer Infrarotsensoreinrichtung eingerichtet, die ein Sensorelement und einen Lichtleiter umfassen und nach oben gerichtet sein kann. Insbesondere ist die Durchführung 8 bezüglich der geschlossenen Kurve 28, auf der die Gasausströmöffnungen 19 angeordnet sind, radial nach außen versetzt. Somit kann eine Flamme oder ein Flammenbereich, die/der bei bestimmungsgemäßem Betrieb des Gasbrenners 2a an den Gasausströmöffnungen 19 erzeugt wird, außerhalb eines Bereichs ausgebildet werden, in dem eine in der Durchführung 9 aufgenommene Infrarotsensoreinrichtung die Wärmestrahlung IR erfasst.

Die Gasausströmöffnungen 19 sind in einer Umgebung der Durchführung 8 ausgespart, so dass ein Erfassungsbereich der Infrarotsensoreinrichtung 5 außerhalb des Flammenbereichs liegt.

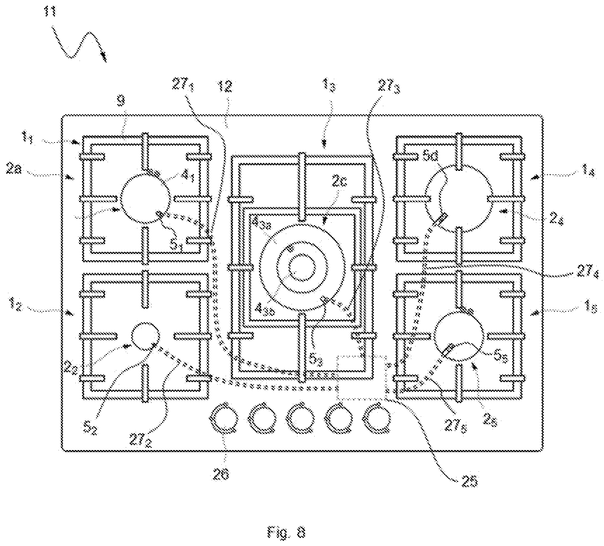

Fig. 8 zeigt eine Draufsicht einer Ausführungsform einer Kochfeldanordnung 11.

Die Gaskochstellen 1₁ - 1₅ umfassen jeweils einen Gasbrenner 2₁ -2₅. Die Gasbrenner 2₁-2₅ weisen jeweils eine Brennerbasis und einen Brennerdeckel auf und sind zum Erzeugen eines Flammenbereichs eingerichtet.

Die Gasbrenner 2₁ - 2₃ weisen jeweils eine Durchführung auf, in der die jeweilige Infrarotsensoreinrichtung 5₁ - 5₃ angeordnet ist. Die Gaskochstellen 2₄ - 2₅ weisen jeweils einen Schlitz in dem Brennerdeckel und in der Brennerbasis auf, in dem jeweils eine Infrarotsensoreinrichtung 5₄ - 5₅ angeordnet ist. Alle Infrarotsensoreinrichtungen 5₁ - 5₅ sind eingerichtet, Wärmestrahlung, die von einem der jeweiligen Kochstelle zugeordneten Gargutbehälter abgestrahlt wird, zu erfassen und in Abhängigkeit von der erfassten Wärmestrahlung Sensorsignale zu erzeugen. Die Infrarotsensoreinrichtungen 5₁ - 5₅ sind jeweils über eine elektrische und/oder optische Leitung 27₁ - 27₅ mit einer Steuereinheit 25 verbunden und sind eingerichtet, die Sensorsignale an die Steuereinheit 25 zu übermitteln. Die Steuereinheit 25 ist eingerichtet, in Abhängigkeit von empfangenen Sensorsignalen eine Gaszufuhr an die jeweiligen Gaskochstellen 1₁ - 1₅ zu regulieren.

Alternativ ist das Sensorelement 5e in der Steuereinheit 25 integriert oder die Steuereinheit 25 umfasst das Sensorelement 5e. Die erfasste Wärmestrahlung IR wird über den jeweiligen Lichtleiter 5f sowie über die optischen Leitungen 27₁ - 27₅ an die Steuereinheit 25 geleitet. Das Sensorelement 5e oder die Steuereinheit 25 erzeugt in Abhängigkeit von der empfangenen Wärmestrahlung IR die Sensorsignale.

### Verwendete Bezugszeichen:

- 1, 1₁ - 1₅: Kochstelle
- 2, 2₁ - 2₅: Gasbrenner
- 3: Brennerbasis
- 4: Brennerdeckel
- 5, 5₁ - 5₅: Infrarotsensoreinrichtung
- 5e: Sensorelement
- 5f: Lichtleiter
- 5s: Oberseite
- 6: Gargutbehälter
- 6s: Unterseite
- 7: Schlitz
- 8, 8e, 8f, 8m: Durchführung
- 9: Topfträger
- 10: Auflagefläche
- 11: Kochfeldanordnung
- 12: Deckplatte
- 13: Kochmuldenwanne
- 14: Raum
- 15, 15a: Gaszuleitung
- 16, 16a: Brennerunterteil
- 17: Mischkammer
- 18: Hohlraum
- 19: Gasausstromkanal
- 20: Ringelement
- 21: Zündelement
- 22: Thermoelement
- 23: Rahmen
- 24: Finger
- 25: Steuereinheit
- 26: Bedienelement
- 27₁ - 27₅: Leitung
- 28: Kurve

## Patentansprüche

1. Gaskochstelle (1) umfassend:
einen Gasbrenner (2), der eine Brennerbasis (3), einen Brennerdeckel (4) und mehrere Gasausströmöffnungen (19) aufweist, und
eine Infrarotsensoreinrichtung (5) zum Ermitteln einer Temperatur eines der Gaskochstelle (1) zugeordneten Gargutbehälters (6),
wobei die Gasausströmöffnungen (19) auf einer geschlossenen Kurve (28) angeordnet sind,
wobei die Infrarotsensoreinrichtung (5) auf der geschlossenen Kurve (28) oder von der geschlossenen Kurve (28) radial nach außen versetzt angeordnet ist, **dadurch gekennzeichnet, dass** die Infrarotsensoreinrichtung (5) die Brennerbasis (3) und den Brennerdeckel (4) zumindest teilweise durchstößt.

2. Gaskochstelle nach Anspruch 1, **dadurch gekennzeichnet, dass** die Infrarotsensoreinrichtung (5) einen Lichtleiter (5f) und ein Sensorelement (5e) umfasst,
wobei der Lichtleiter (5f) zum Übertragen von Wärmestrahlung (IR), welche von dem Gargutbehälter (6) abgestrahlt wird, an das Sensorelement (5e) eingerichtet ist, und wobei das Sensorelement (5e) zum Erzeugen von Sensorsignalen in Abhängigkeit von der erfassten Wärmestrahlung (IR) eingerichtet ist.

3. Gaskochstelle nach Anspruch 2, **dadurch gekennzeichnet, dass**
der Lichtleiter (5f) die Brennerbasis (3) und/oder den Brennerdeckel (4) zumindest teilweise durchstößt, und
das Sensorelement (5e) außerhalb des Gasbrenners (2) angeordnet ist.

4. Gaskochstelle nach einem der Ansprüche 1 - 3, **dadurch gekennzeichnet, dass**
die mehreren Gasausströmöffnungen (19) zum Erzeugen von Flammen eingerichtet sind,
die Flammen beim bestimmungsgemäßen Betrieb des Gasbrenners (2) einen Flammenbereich bilden, und
die Gasausströmöffnungen (19) derart angeordnet sind, dass ein von der Infrarotsensoreinrichtung (5) erfasster Bereich bei maximaler Heizleistung des Gasbrenners (2) außerhalb des Flammenbereichs liegt.

5. Gaskochstelle nach einem der Ansprüche 1 - 4, **dadurch gekennzeichnet, dass**
die Infrarotsensoreinrichtung (5) dazu eingerichtet ist, von einer Unterseite (6_{S}) des Gargutbehälters (6) abgestrahlte Wärmestrahlung (IR) zu erfassen.

6. Gaskochstelle nach einem der Ansprüche 1 - 5,, **dadurch gekennzeichnet, dass**
die Brennerbasis (3) und/oder der Brennerdeckel (4) eine Durchführung (8) zur Aufnahme der Infrarotsensoreinrichtung (5) aufweist.

7. Gaskochstelle nach einem der Ansprüche 1 - 6, **dadurch gekennzeichnet, dass**
die Brennerbasis (3) und/oder der Brennerdeckel (4) einen Schlitz (7) zur Aufnahme der Infrarotsensoreinrichtung (5) aufweist.

8. Gaskochstelle nach einem der Ansprüche 1 - 7, **dadurch gekennzeichnet, dass**
die Infrarotsensoreinrichtung (5) eine dem Gargutbehälter (6) zugewandte Oberseite (5_{S}) aufweist, wobei die Oberseite (5_{S}) mit einer Brennerdeckeloberseite (4_{S}) bündig abschließt.

9. Gaskochstelle nach einem der Ansprüche 1 - 7, **dadurch gekennzeichnet, dass**
die Infrarotsensoreinrichtung (5) eine Oberseite (5_{S}) aufweist, wobei die Oberseite (5_{S}) innerhalb des Brennerdeckels (4) angeordnet ist.

10. Gaskochstelle nach einem der Ansprüche 1 - 9, **dadurch gekennzeichnet, dass**
ein infrarotdurchlässiges Material oberhalb einer Oberseite (5_{S}) der Infrarotsensoreinrichtung (5) angebracht ist.

11. Gaskochstelle nach einem der Ansprüche 1 - 10, **dadurch gekennzeichnet, dass**
die Brennerbasis (3) eine ringförmige Auflagefläche (10) aufweist, auf oder an der der Brennerdeckel aufliegt, wobei die Infrarotsensoreinrichtung (5) in der Brennerbasis (3) und/oder dem Brennerdeckel (4) innerhalb der Auflagefläche (10) angeordnet ist.

12. Gaskochstelle nach einem der Ansprüche 1 - 11, mit einem Topfträger (9), der einen Rahmen (23) und mehrere Finger (24) umfasst, die von dem Rahmen (23) aus nach innen gerichtet sind,
wobei die Infrarotsensoreinrichtung (5) unterhalb eines der mehreren Finger (24) ausgebildet ist.

13. Kochfeldanordnung (11) umfassend mindestens eine Gaskochstelle (1) nach einem der Ansprüche 1 - 12.

14. Kochfeldanordnung nach Anspruch 13 ferner umfassend eine Steuereinheit (25), wobei
die Infrarotsensoreinrichtung (5) der mindestens einen Gaskochstelle (1) eingerichtet ist, Sensorsignale in Abhängigkeit von einer erfassten Wärmestrahlung (IR) zu erzeugen und an die Steuereinheit (25) zu übermitteln.

15. Kochfeldanordnung nach Anspruch 14, **dadurch gekennzeichnet, dass**
die Steuereinheit (25) eine Heizleistung der Gaskochstelle (1) in Abhängigkeit von den Sensorsignalen steuert.

## Claims

1. Gas cooking zone (1) comprising:
a gas burner (2) which has a burner base (3), a burner cover (4) and a plurality of gas outlet ports (19), and
an infrared sensor device (5) for ascertaining a temperature of a cooking receptacle (6) associated with the gas cooking zone (1),
wherein the gas outlet ports (19) are arranged on a closed curve (28),
wherein the infrared sensor device (5) is arranged on the closed curve (28) or offset in a radially outward direction from the closed curve (28), **characterised in that** the infrared sensor device (5) at least partially penetrates the burner base (3) and the burner cover (4).

2. Gas cooking zone according to claim 1, **characterised in that**
the infrared sensor device (5) comprises a light guide (5f) and a sensor element (5e), wherein the light guide (5f) is set up on the sensor element (5e) to transmit thermal radiation (IR) which is emitted by the cooking receptacle (6), and
wherein the sensor element (5e) is set up to generate sensor signals as a function of the detected thermal radiation (IR).

3. Gas cooking zone according to claim 2, **characterised in that**
the light guide (5f) at least partially penetrates the burner base (3) and/or the burner cover (4), and
the sensor element (5e) is arranged outside the gas burner (2).

4. Gas cooking zone according to one of claims 1 - 3, **characterised in that**
the plurality of gas outlet ports (19) are set up to generate flames,
the flames form a flame region during normal operation of the gas burner (2), and
the gas outlet ports (19) are arranged such that a region detected by the infrared sensor device (5) lies outside the flame region at maximum heat output of the gas burner (2).

5. Gas cooking zone according to one of claims 1-4, **characterised in that**
the infrared sensor device (5) is set up to detect thermal radiation (IR) emitted from an underside (6_{S}) of the cooking receptacle (6).

6. Gas cooking zone according to one of claims 1 - 5, **characterised in that**
the burner base (3) and/or the burner cover (4) has a bushing (8) for accommodating the infrared sensor device (5).

7. Gas cooking zone according to one of claims 1 - 6, **characterised in that**
the burner base (3) and/or the burner cover (4) has a slot (7) for accommodating the infrared sensor device (5).

8. Gas cooking zone according to one of claims 1-7, **characterised in that**
the infrared sensor device (5) has an upper side (5_{S}) facing the cooking receptacle (6), wherein the upper side (5_{S}) is flush with a burner cover upper side (4_{S}).

9. Gas cooking zone according to one of claims 1 - 7, **characterised in that**
the infrared sensor device (5) has an upper side (5_{S}), wherein the upper side (5_{S}) is arranged inside the burner cover (4).

10. Gas cooking zone according to one of claims 1 - 9, **characterised in that**
an infrared-transmissive material is mounted above an upper side (5_{S}) of the infrared sensor device (5).

11. Gas cooking zone according to one of claims 1 - 10, **characterised in that**
the burner base (3) has an annular supporting surface (10) on or against which the burner cover is supported, wherein the infrared sensor device (5) is arranged in the burner base (3) and/or the burner cover (4) inside the supporting surface (10).

12. Gas cooking zone according to one of claims 1-11, with a pot support (9) comprising a frame (23) and a plurality of fingers (24) which are directed inwards from the frame (23),
wherein the infrared sensor device (5) is embodied below one of the plurality of fingers (24).

13. Cooktop arrangement (11) comprising at least one gas cooking zone (1) according to one of claims 1-12.

14. Cooktop arrangement according to claim 13, further comprising a control unit (25),
wherein the infrared sensor device (5) of the at least one gas cooking zone (1) is set up to generate sensor signals as a function of detected thermal radiation (IR) and to transmit these to the control unit (25).

15. Cooktop arrangement according to claim 14, **characterised in that**
the control unit (25) controls a heat output of the gas cooking zone (1) as a function of the sensor signals.

## Revendications

1. Table de cuisson à gaz (1) comprenant :
un brûleur à gaz (2) comportant une base de brûleur (3), un couvercle de brûleur (4) et une pluralité d'orifices de sortie de gaz (19), ainsi qu'un dispositif à capteur infrarouge (5) pour déterminer la température d'un récipient de cuisson d'aliments (6) associé à la table de cuisson à gaz (1), dans laquelle les orifices de sortie de gaz (19) sont agencées sur une courbe fermée (28), dans laquelle le dispositif à capteur infrarouge (5) est disposé sur la courbe fermée (28) ou de manière radialement décalée vers l'extérieur par rapport à la courbe fermée (28), **caractérisée en ce que** le dispositif à capteur infrarouge (5) traverse au moins partiellement la base de brûleur (3) et le couvercle de brûleur (4).

2. Table de cuisson selon la revendication 1, **caractérisée en ce que** le dispositif à capteur infrarouge (5) comprend une fibre optique (5f) et un élément de détection (5e), dans laquelle la fibre optique (5f) est conçue pour transmettre un rayonnement thermique (IR) émis par le récipient de cuisson d'aliments (6) au niveau de l'élément de détection (5e), et dans laquelle l'élément de détection (5e) est conçu pour générer des signaux de détection en fonction du rayonnement thermique (IR) détecté.

3. Table de cuisson à gaz selon la revendication 2, **caractérisée en ce que** la fibre optique (5f) traverse au moins partiellement la base de brûleur (3) et/ou le couvercle de brûleur (4), et l'élément de détection (5e) est agencé à l'extérieur du brûleur à gaz (2).

4. Table de cuisson à gaz selon l'une des revendications 1 à 3, **caractérisée en ce que** la pluralité d'orifices de sortie de gaz (19) est conçue pour produire des flammes, les flammes forment une zone de flammes lors du fonctionnement normal du brûleur à gaz (2) et les orifices de sortie de gaz (19) sont agencés de manière à ce qu'une zone détectée par le dispositif à capteur infrarouge (5) se trouve en dehors de la zone de flammes à la puissance de chauffage maximale du brûleur à gaz (2).

5. Table de cuisson à gaz selon l'une des revendications 1 à 4, **caractérisée en ce que** le dispositif à capteur infrarouge (5) est conçu pour détecter le rayonnement thermique (IR) émis depuis un fond (6_{S}) du récipient de cuisson d'aliments (6).

6. Table de cuisson à gaz selon l'une des revendications 1 à 5, **caractérisée en ce que** la base de brûleur (3) et/ou le couvercle de brûleur (4) comporte(nt) un passage (8) destiné à recevoir le dispositif à capteur infrarouge (5).

7. Table de cuisson à gaz selon l'une des revendications 1 à 6, **caractérisée en ce que** la base de brûleur (3) et/ou le couvercle de brûleur (4) comporte(nt) une fente (7) destinée à recevoir le dispositif à capteur infrarouge (5).

8. Table de cuisson à gaz selon l'une des revendications 1 à 7, **caractérisée en ce que** le dispositif à capteur infrarouge (5) comporte une face supérieure (5_{S}) orientée vers le récipient de cuisson d'aliments (6), la face supérieure (5_{S}) affleurant avec une face supérieure (4_{S}) du couvercle de brûleur.

9. Table de cuisson à gaz selon l'une des revendications 1 à 7, **caractérisée en ce que** le dispositif à capteur infrarouge (5) comporte une face supérieure (5_{S}), la face supérieure (5_{S}) étant agencée à l'intérieur du couvercle de brûleur (4).

10. Table de cuisson à gaz selon l'une des revendications 1 à 9, **caractérisée en ce qu'**un matériau perméable aux infrarouges est monté au-dessus d'une face supérieure (5_{S}) du dispositif à capteur infrarouge (5).

11. Table de cuisson à gaz selon l'une des revendications 1 à 10, **caractérisée en ce que** la base de brûleur (3) comporte une surface d'appui annulaire (10), sur laquelle ou au niveau de laquelle s'appuie le couvercle de brûleur, le dispositif à capteur infrarouge (5) étant agencé dans la base de brûleur (3) et/ou dans le couvercle de brûleur (4) à l'intérieur de la surface d'appui (10).

12. Table de cuisson à gaz selon l'une des revendications 1 à 11, pourvue d'un support à casserole (9) comprenant un châssis (23) et une pluralité de pattes (24) dirigées vers l'intérieur à partir du châssis (23), dans laquelle le dispositif à capteur infrarouge (5) est formé en dessous de l'une de la pluralité de pattes (24).

13. Agencement de plaques de cuisson (11) comprenant au moins une table de cuisson à gaz (1) selon l'une des revendications 1 à 12.

14. Agencement de plaques de cuisson selon la revendication 13, comprenant en outre une unité de commande (25), dans lequel le dispositif à capteur infrarouge (5) de l'au moins une table de cuisson à gaz (1) est conçu pour générer et transmettre à l'unité de commande (25) des signaux de détection en fonction d'un rayonnement thermique (IR) détecté.

15. Agencement de plaques de cuisson selon la revendication 14, **caractérisé en ce que** l'unité de commande (25) commande une puissance de chauffage de la table de cuisson à gaz (1) en fonction des signaux de détection.
